# EUROPEAN PATENT APPLICATION

(11) **EP 1 919 183 A2**
(43) Date of publication of application: **07.05.2008**
(21) Application number: 07119362.7
(22) Date of filing: 26.10.2007
(51) Int. Cl.: H04N 1/333

(54) **Systems and methods for serving documents from a multifunction peripheral**

(30) Priority: 27.10.2006 US 553969
(71) Applicant: Ricoh Company, Ltd., Tokyo 143-8555 (JP)
(72) Inventor: Piersol, Kurt, Ricoh Innovations, Inc, California Research Center, Menlo Park, CA 94025-7054 (US); Boliek, Martin, Ricoh Innovations Inc, California Research Center, Menlo Park, CA 94025-7054 (US)
(74) Representative: Schwabe - Sandmair - Marx

(57) **Abstract**

A document serving system includes at least one client interaction module and a multifunction peripheral with an integrated server (or document processor & server) for processing, storing, receiving and sending image and data files. The document serving system receives an original image or document file and stores the original file at the integrated server. The document serving system generates an Independently Usable Image (IUI) file that is smaller in size, lower in resolution and includes at least one reference to the original file. The IUI file can be sent to and manipulated by the client devices. The integrated server includes a receipt and storage module, a transmission module, a display interaction module, a creation module and a printer interaction module. The present invention also includes a number of novel methods including: a method for generating an IUI file, a method for processing and storing an original image file, and a method for serving documents.

## Description

### BACKGROUND OF THE INVENTION

### 1. Field of the Invention

The present invention relates to systems and methods for capturing, printing and viewing documents. In particular, the present invention relates to systems and methods for serving documents from a Multi-Function Peripheral (MFP). More specifically, the present invention relates to a MFP that includes a server capable of storing and sending documents to client devices in an efficient manner.

### 2. Description of the Background Art

The use and proliferation of paper photocopiers is well known. Since their introduction, photocopiers have become an essential and basic part of every office and organization. Recently, the functionality of printers and photocopiers has converged into a new device referred to as an MFP. Such MFPs have become commonplace and typically include the ability to scan documents, print documents, photocopy documents, and send and receive facsimile transmissions.

In addition to providing multiple types of functionality, present day MFPs differ significantly in their print capabilities. Small home office MFPs offer very basic print quality of 300 or 600 DPI, while high end commercial MFPs offer quality of 2400 DPI and greater. Thus there is a need to be able to provide data that can maximize the capabilities of the MFP.

Along with the advances in the printing arts, there have been advances in the capture, manipulation and display of images. For example, there are now many devices such as digital cameras or scanners that are able to capture high resolution images. Furthermore, color images for both display and printing have become widespread. The file size for such image files has greatly increased. File sizes for image files are often greater than several megabytes. The use of images in a variety of applications, as attachments to emails or inclusion in web pages has also created new problems for the transmission and manipulation of image files. For example, the increase in size and uses of image files has added significant load to networks such that sending numerous image files has adverse effects on the speed of local area and wide area networks.

The prior art has attempted to solve this problem by creating low resolution files such as thumbnails and using them in place of the original image file. However, the problem with such a prior art approach is that only the most general information is available in such thumbnail images, and display of the thumbnail image does not allow the user to pan and zoom-in on different portions of the image. The printing of such thumbnail images is also inadequate for most uses. Thus, there is a need for a method of providing image data in networks without the adverse effects of having to send and receive large image files.

Therefore, what is needed is a system and methods for efficiently serving documents from a multifunction peripheral that also full utilization of the devices to and from which image file are sent and received.

### SUMMARY OF THE INVENTION

The present invention overcomes the deficiencies and limitations of the prior art by providing a document serving system. In one embodiment, the document serving system includes at least one client interaction module and a multifunction peripheral with an integrated server (or document processor & server) for processing, storing, receiving and sending image and data files. The document serving system receives an original image or document file and stores the original file at the integrated server. The document serving system also generates an Independently Usable Image (IUI) file that is smaller in size, lower in resolution and includes at least one reference to the original file. The IUI file can be sent to and manipulated by the client interaction module. The IUI file generates an image of suitable quality for display and the reference(s) allow additional information to be retrieved for panning and zooming on the display image. In one embodiment, the integrated server generates the IUI file, and in alternate embodiment, the client interaction module generates the IUI file. The integrated server includes a receipt and storage module, a transmission module, a display interaction module, a creation module and a printer interaction module. The client interaction module preferably comprises a client communication module, a client storage module, a client display module, and may optionally further include a client print module and a client creation module.

The present invention also includes a number of novel methods including: a method for generating an IUI file, a method for processing and storing an original image file, and a method for serving documents.

### BRIEF DESCRIPTION OF THE DRAWINGS

The invention is illustrated by way of example, and not by way of limitation in the figures of the accompanying drawings in which like reference numerals are used to refer to similar elements.
**Figure 1** is a block diagram of a first embodiment of the document serving system of the present invention for serving documents from a MFP.
**Figure 2** is a block diagram of an embodiment of a server integrated MFP according to the present invention.
**Figure 3** is a block diagram of an embodiment of a client device according to the present invention.
**Figure 4** is a block diagram of one embodiment of a document processor & server in accordance with the present invention.
**Figure 5** is a block diagram of one embodiment of a memory for the document processor & server.
**Figures 6A and 6B** are flowcharts of a first embodiment of a method for serving documents according to the present invention.
**Figures 7A and 7B** are a flow diagram showing exemplary actions performed by the document processor & server of the present invention when serving documents.
**Figure 7C** is a flow diagram showing exemplary actions performed by the client of the present invention when serving documents.
**Figure 8** is a flowchart of a second embodiment of the method for serving documents according to the present invention.
**Figure 9A** is a block diagram of a first embodiment for the independently usable image file according to the present invention.
**Figure 9B** is a block diagram of a second embodiment for the independently usable image file according to the present invention.
**Figure 10A** is a block diagram of a second embodiment of the document serving system of the present invention for serving documents from a MFP.
**Figure 10B** is a block diagram of a third embodiment of the document serving system of the present invention for serving documents from a MFP.

### DETAILED DESCRIPTION OF THE PREFERRED EMBODIMENTS

A system and methods for serving documents from a MFP are described. In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention. For example, the present invention is described primarily with reference to serving scanned documents from a multifunction peripheral. However, the present invention applies to any type of file or document that has been input or received by the MFP.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed descriptions that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computer system bus.

The algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

Moreover, the present invention claimed below is operating on or working in conjunction with an information system or network. For example, the invention can operate on a stand alone multifunction peripheral or a networked printer with functionality varying depending on the configuration. Thus, the present invention is capable of operating with any information system from those with minimal functionality to those providing all the functionality disclosed herein.

Finally, it should be noted that the system is primarily described in terms of images files because of the large variation in size that can be provided for different files with different levels of quality. Those skilled in the art will recognize that the present invention applies to any type of file, and is not limited to image files. Image files are used only by way of example to illustrate the features and functions of the present invention.

### System Overview

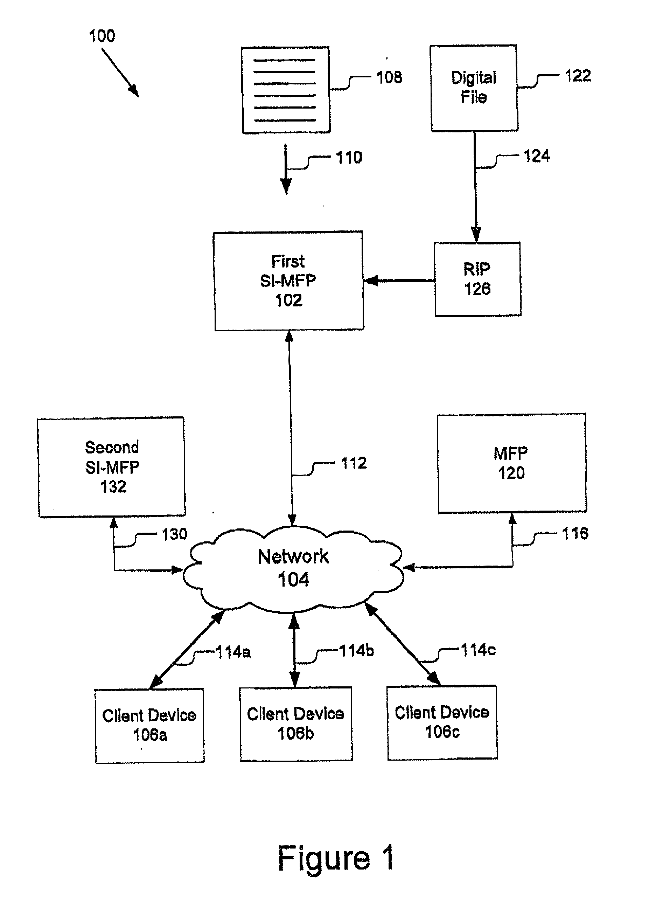

Referring now to Figure 1, an embodiment of the document serving system 100 of the present invention is shown. In this embodiment, the system 100 comprises: a server integrated multifunction peripheral (SI-MFP) 102, a network 104, a plurality of client devices 106a-c, another MFP 120 and a raster image processor (RIP) 126. Figure 1 also depicts a document 108 input 110 to the SI-MFP 102, and a digital file 122 sent to the RIP 126 via communication line 124.

The present invention is directed to an apparatus, the SI-MFP 102, capable of serving documents to other devices such as the client devices 106a-c or the other MFP 120; receiving original image or document files for storage from other devices such as the client devices 106a-c, the RIP 126, or the MFP 120; and receiving original image or document files produced by the SI-MFP 102. The present invention advantageously receives and stores such original images or files, and generates from them an Independently Usable Image (IUI) file that is smaller in size, lower in resolution and includes references to the original file. The IUI file is then sent by the SI-MFP 102 to other devices 106a-c for display of the file. Upon request or need, the original file can be provided, but network traffic is reduced by primarily using the IUI file for most operations. The IUI file includes references to the original file so that selected portions (significantly less than the entire original file) may be requested from the SI-MFP 102 where more detailed information is needed such as for pan or zoom operations.

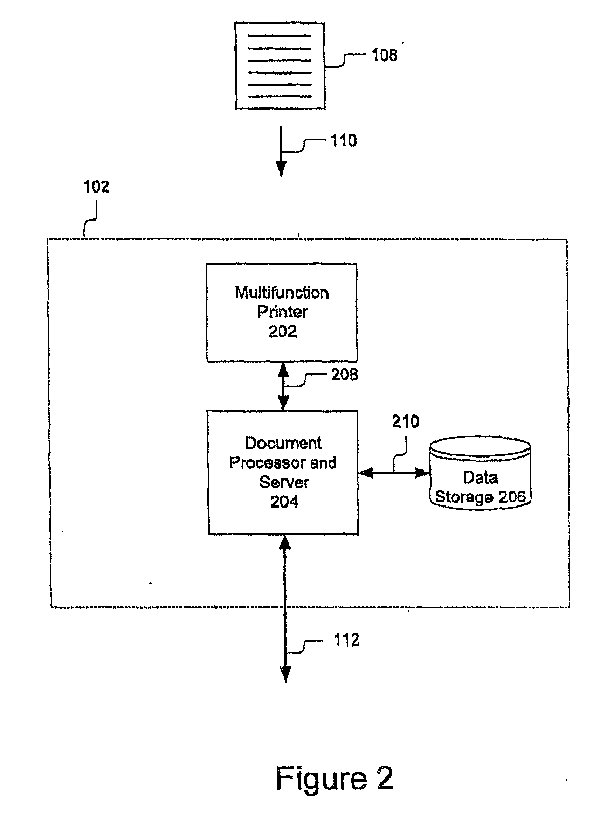

The server integrated multifunction peripheral (SI-MFP) 102 is a device for serving documents to other devices 106a-c, 120, for creating IUI files from original files and for storing high resolution, large sized original files. The SI-MFP 102 is coupled by signal line 112 to a network 104 for communication and interaction with other devices 106a-c, 120, The SI-MFP 102 is described in more detail below with reference to Figures 2,4 and 5. The SI-MFP 102 includes the ability to scan or capture images of document, and can itself generate an original image through use of this capability. For example, document 108 can be scanned 110 by the SI-MFP 102 to produce an original image. The SI-MFP 102 is also coupled to the RIP 126 to receive original image files.

The network 104 is preferably of a conventional type for interconnecting computing devices. The network 104 can be any one of a conventional type such as a local area network (LAN), a wide area network (WAN) or any other interconnected data path across which multiple computing devices may communicate.

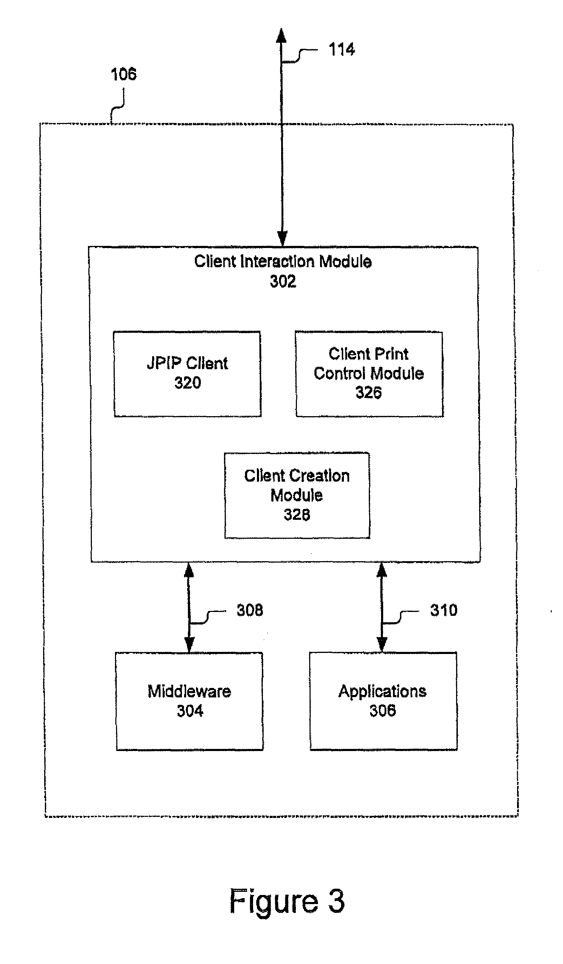

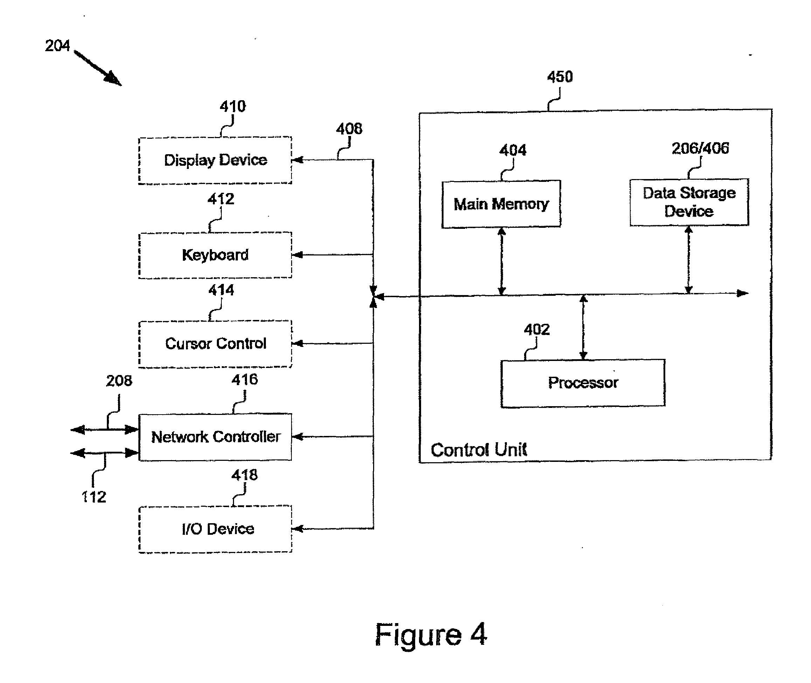

One or more client devices 106a-c is coupled to the network 104 by signal lines 114a-c, respectively, for communication with other devices 102, 106 and 120. The client devices 106a-c include conventional client processing capabilities, but also include a client interaction module 302 (See Figure 3) for interaction with the SI-MFP 102. The client interaction module 302 is adapted to enable communication with the SI-MFP 102 so that portions of the original files can be sent between the SI-MFP 102 and the client devices 106a-c minimally as needed, while most interaction occurs by sending the IUI file between the SI-MFP 102 and the client devices 106a-c. The client interaction module 302 also interacts with the SI-MFP 102 during use of the IUI file such as for pan or zoom operations. The client devices 106a-c, and in particular the client interaction module 302 are described below in more detail with reference to Figures 3 and 4.

A conventional MFP 120 is also coupled to the network 104 to receive documents for printing or output on the MFP 120. The MFP 120 has the functionality of a conventional multifunction peripheral such as the ability to scan, copy and fax. In this embodiment, the MFP 120 is coupled to the network 104 by signal line 116 for communication and cooperation with other devices 102, 106. In one embodiment, the system 100 includes a second SI-MFP 132 coupled by signal line 130 to the network 104. The second SI-MFP 132 includes all the functionality of the first SI-MFP 102, or may be just a client or just a server portion. The second SI-MFP 132 is adapted for communication with the first SI-MFP 102 to enable the two SI-MFPs 102, 132 to work together cooperatively. The first SI-MFP 102 can print on the second SI-MFP 132, or vice versa, In such a scenario, the second SI-MFP 132 acts as a JPIP client (and can request any portion or all of the document to be printed) and the first SI-MFP 102 acts as a JPIP server and stores the document.

A raster image processor (RIP) 126 is a device or software that converts vector digital information such as a page description in a high-level page description language such as PostScript into a high-resolution raster image such as a bitmap. The RIP 126 is adapted to receive digital file 122 and convert it to a bitmap that is stored in the SI-MFP 102. The output of the RIP 126 is adapted for communication with the SI-MFP 102 for that purpose. In yet another embodiment, the RIP 126 is replaced by a conversion device (not shown) that is capable of receiving and converting non still image formats or renderings to a printable format. In this embodiment, the conversion device receives and converts digital data streams to a printable form such as described in application serial no. 10/001,895 filed November 19, 2001 and co-pending U.S. patent application serial no. 10/814,948, filed March 30,2004 and titled "Networked Printing System Having Embedded Functionality For Printing Time-Based Media."

### Server Integrated Multifunction Peripheral (SL-MFP) 102

Referring now to Figure 2, a block diagram of a SI-MFP 102 according to the present invention is shown in more detail. The SI-MFP 102 comprises a multifunction peripheral 202, a document processor & server 204, and a data storage unit 206. Although shown in block diagram form, those skilled in the art will recognize that these components may be integrated into a single device.

The multifunction peripheral 202 may be of a conventional type and is an office machine that includes conventional capabilities including printing, scanning, faxing, copying and transferring data in one physical housing. The multifunction peripheral 202 includes electronics, imaging components, sockets/interfaces and paper handling mechanisms to scan and capture images of documents, receive documents in digital form and print them, and provides interfaces to communicate with other devices such as but not limited to computers, networks and media storage devices.

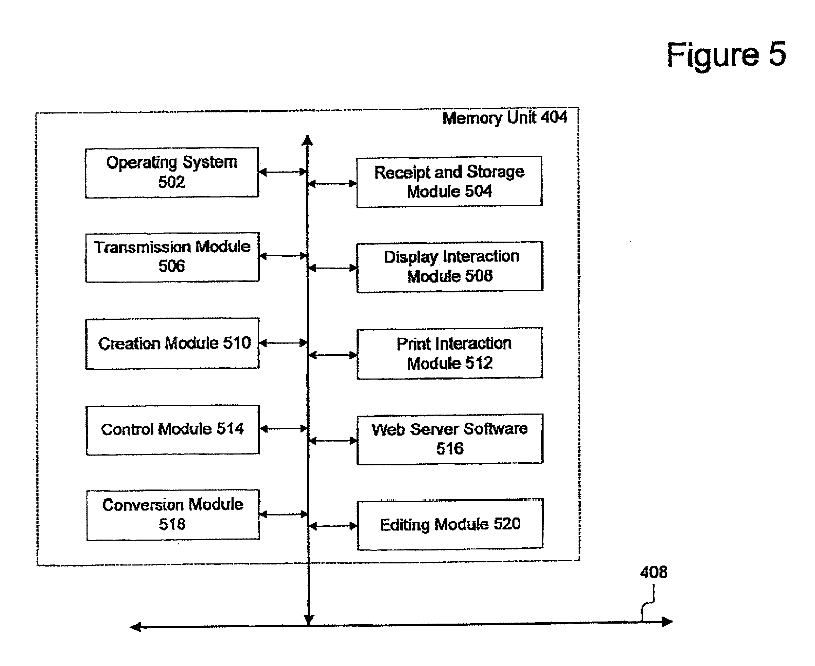

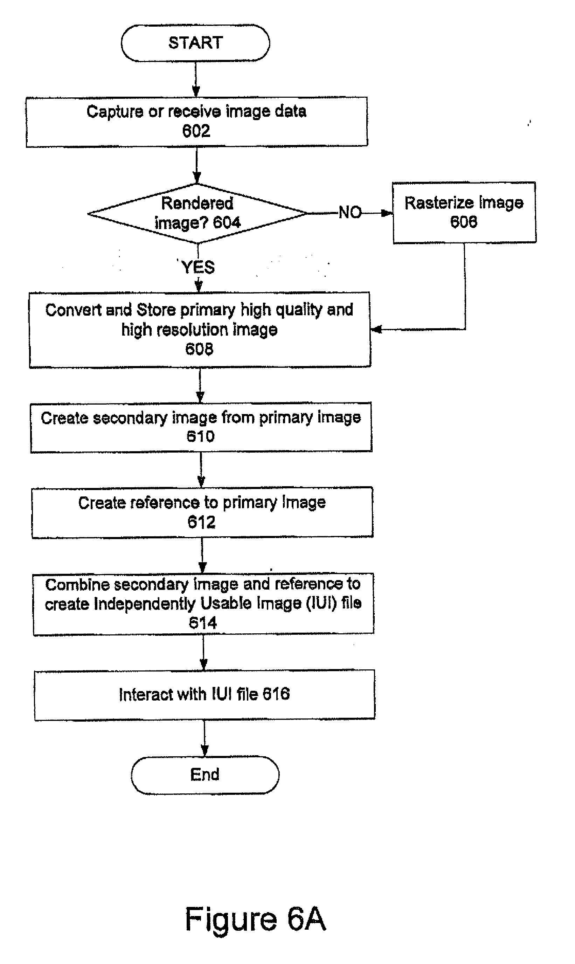

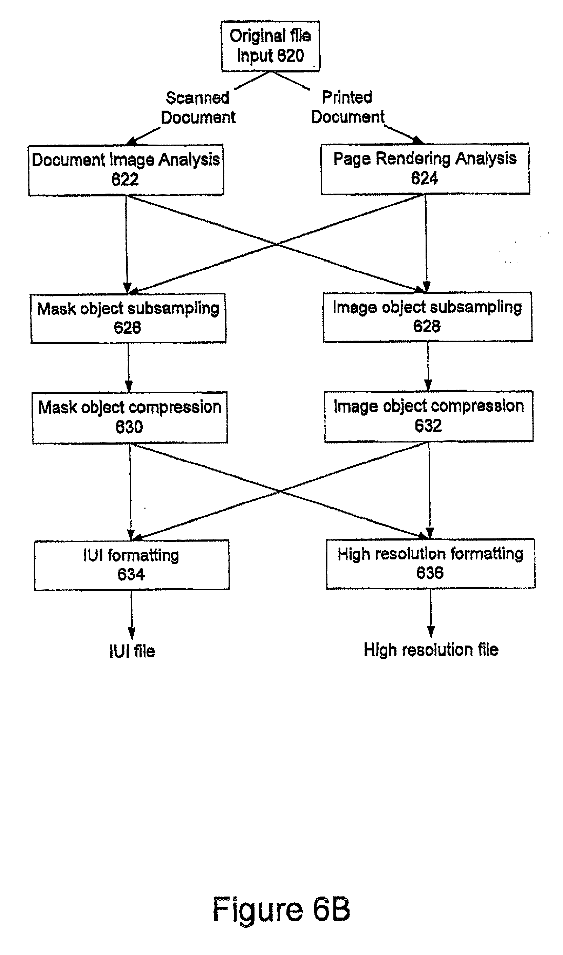

The document processor & server 204 is an apparatus for serving documents to other devices, for creating IUI files from original files and for storing high resolution, large sized original files and/or IUI files in the data storage unit 206. The document processor & server 204 is coupled for communication and interaction with the multifunction peripheral 202 by signal line 208, the data storage unit 206 by signal line 210, and to client devices 106a-c by signal line 112 and a network 104. The document processor & server 204 is described in more detail below with reference to Figures 4 and 5, The document processor & server 204 is hardware capable of executing and performing routines to achieve the functionality described below with reference to Figures 6, 7A, 7B and 8.

The data storage unit 206 is a device such as a hard disk drive or other storage media. The data storage unit 206 is shown as being coupled to the document processor & server 204 in this embodiment. The data storage unit 206 is used to store high resolution, large sized original files and/or IUI files. The data storage unit 206 can also be used as a data storage for the multifunction peripheral 202.

### Document Processor & Server 204

Figure 4 is a block diagram of one embodiment of the document processor & server 204 in accordance with the present invention. The document processor & server 204 preferably comprise a control unit 450, and a network controller 416. The document processor & server 204 may optionally include a display device 410, a keyboard 412, a cursor control device 414, and one or more input/output (I/O) device(s) 418.

The control unit 450 comprises an arithmetic logic unit, a microprocessor, a general purpose computer, or some other information appliance equipped to provide electronic display signals to display device 410. In one embodiment, control unit 450 comprises a general purpose computer having a graphical user interface, which may be generated by, for example, a program written in Java running on top of an operating system like WINDOWS® or UNIX® based operating systems. In one embodiment, one or more application programs are executed by control unit 450 including, without limitation, word processing applications, electronic mail applications, financial applications, and web browser applications.

Still referring to Figure 4, the control unit 450 is shown including processor 402, main memory 404, and data storage device 406, all of which are communicatively coupled to system bus 408.

Processor 402 processes data signals and may comprise various computing architectures including a complex instruction set computer (CISC) architecture, a reduced instruction set computer (RISC) architecture, or an architecture implementing a combination of instruction sets. Although only a single processor is shown in Figure 4, multiple processors may be included.

Main memory 404 stores instructions and/or data that may be executed by processor 402. The instructions and/or data may comprise code for performing any and/or all of the techniques described herein. Main memory 404 may be a dynamic random access memory (DRAM) device, a static random access memory (SRAM) device, or some other memory device known in the art. The memory 404 is described in more detail below with reference to Figure 5.

Data storage device 406 stores data and instructions for processor 402 and comprises one or more devices including a hard disk drive, a floppy disk drive, a CD-ROM device, a DVD-ROM device, a DVD-RAM device, a DVD-RW device, a flash memory device, or some other mass storage device known in the art. In an alternate embodiment, data storage 406 may be replaced by a connection to the data storage 206 of the SI-MFP 102. Such a connect is made through a bus coupled to signal line 210 and a drive controller that accesses data storage 206 of the SI-MFP 102

System bus 408 represents a shared bus for communicating information and data throughout control unit 450, System bus 408 may represent one or more buses including an industry standard architecture (ISA) bus, a peripheral component interconnect (PCI) bus, a universal serial bus (USB), or some other bus known in the art to provide similar functionality. Additional components coupled to control unit 450 through system bus 408 include the display device 410, the keyboard 412, the cursor control device 414, the network controller 416 and the I/O device(s) 418.

Network controller 416 links control unit 450 to a network 208 that may include multiple processing systems. The network of processing systems may comprise a local area network (LAN), a wide area network (WAN) (e.g., the Internet), and/or any other interconnected data path across which multiple devices may communicate. The control unit 450 also has other conventional connections to other systems such as a network for distribution of files (media objects) using standard network protocols such as TCP/IP, http, https, and SMTP as will be understood to those skilled in the art. The connection of the document processor & server 204 to the multifunction peripheral 202 by signal line 208 and to the network by signal line 112 are also shown in Figure 4 as passing through network controller 416. However, those skilled in the art will recognize that the multifunction peripheral 202 could be coupled to the bus 408 for interaction with the document processor & server 204 in a variety of conventional ways.

As denoted by dashed lines, the document processor & server 204 may optionally include the display device 410, the keyboard 412, the cursor control device 414, and one or more input/output (I/O) device(s) 418 such as described below.

Display device 410 represents any device equipped to display electronic images and data as described herein. Display device 410 may be, for example, a cathode ray tube (CRT), liquid crystal display (LCD), or any other similarly equipped display device, screen, or monitor. In one embodiment, display device 410 is equipped with a touch screen in which a touch-sensitive, transparent panel covers the screen of display device 410.

Keyboard 412 represents an alphanumeric input device coupled to control unit 450 to communicate information and command selections to processor 402. The Keyboard 412 can be a QWERTY keyboard, a key pad, or representations of such created on a touch screen.

Cursor control 414 represents a user input device equipped to communicate positional data as well as command selections to processor 402. Cursor control 414 may include a mouse, a trackball, a stylus, a pen, a touch screen, cursor direction keys, or other mechanisms to cause movement of a cursor,

One or more I/O devices 418 are coupled to the system bus 408. These I/O devices may be part of multifunction peripheral 202 in one embodiment and in another embodiment are part of the document processor & server 204. For example, the I/O device 418 includes an image scanner and document feeder for capturing an image of a document. The I/O device 418 also includes a printer for generating documents. The I/O device 418 may also include audio input/output device equipped to receive audio input via a microphone and transmit audio output via speakers. In one embodiment, audio device is a general purpose; audio add-in/expansion card designed for use within a general purpose computer system. Optionally, I/O audio device may contain one or more analog-to-digital or digital-to-analog converters, and/or one or more digital signal processors to facilitate audio processing.

It should be apparent to one skilled in the art that document processor & server 204 may include more or less components than those shown in Figure 4 without departing from the spirit and scope of the present invention. For example, document processor & server 204 may include additional memory, such as, for example, a first or second level cache, or one or more application specific integrated circuits (ASICs). Similarly, additional components input/output devices 418 may be coupled to control unit 450 including, for example, an RFID tag reader, digital still or video cameras, or other devices that may or may not be equipped to capture and/or download electronic data to control unit 450. One or more components could also be eliminated such as cursor control 414.

Figure 5 is a block diagram of one embodiment of the memory unit 404 for the document processor & server 204. The memory unit 404 for the document processor & server 204 preferably comprises: an operating system 502, a receipt and storage module 504, a transmission module 506, a display interaction module 508, a creation module 510, a print interaction module 512, a control module 514, web server software 516, a conversion module 518 and an editing module 520. As noted above, the memory unit 404 stores instructions and/or data that may be executed by processor 402. The instructions and/or data comprise code for performing any and/or all of the techniques described herein. These modules 502-514 are coupled by bus 408 to the processor 402 for communication and cooperation to provide the document processor & server 204. Those skilled in the art will recognized that while the present invention will now be described as modules or portions of a memory unit 404 of a computer system, the modules or portions thereof may also be stored in other media such as permanent data storage device 406 and may be distributed across a network 104 having a plurality of different computers such as in a client/server environment.

The operating system 502 is preferably one of a conventional type such as, WINDOWS®, SOLARIS® or LINUX® based operating systems. Although not shown, the memory unit 404 may also include one or more application programs including, without limitation, word processing applications, electronic mail applications, financial applications, and web browser applications.

The web server software 516 is a conventional type such as Apache for implementing a HTTP request/response protocol between clients and servers. The web server software 516 also includes software to implement JPIP serving, or any other compression streamlining protocol. For example, the web server software 516 uses standard protocols for communication with the client such as HTTP and JPIP according to the ISO/IEC 15444:9 JPEG 2000 Interactive Protocols. In one embodiment, the web server software 516 includes JPIP client software to allow the SI-MFP 102 to act as a JPIP client to another SI-MFP 132 server. Thus for example, the first SI-MFP 102 can act as a JPIP client for printing (or as a proxy) for an image on the second SI-MFP server 132. Under such a condition, the SI-MFP 102 acts and has the same functionality as any of the other client devices 106a-n as described throughout this application. In another embodiment, the web server software 516 enables the document processor & server 204 to serve an IUI file the SI-MFP 102 did not create. This can be done by communicating with the other server (e.g. SI-MFP 132) that created and stores the IUI file, or by retrieving it from the receipt and storage module 504 if it is stored there.

The control module 514 is used to control the other modules of the memory 404. The control module 514 is adapted for communication with the receipt and storage module 504, the transmission module 506, the display interaction module 508, the creation module 510, conversion module 518, the editing module 520 and the print interaction module 512. The operation of the control module 514 will be apparent from the description of Figures 6-8 below. While the control module 514 is shown as a separate module of the memory 404, those skilled in the art will recognize that the control module 514 in another embodiment may be distributed as routines in the other modules 504-512.

The receipt and storage module 504 is used to store the IUI file (low resolution) and the original file (high resolution) from which it was created. In one embodiment, the receipt and storage module 504 is adapted for communication with the transmission module 506 to receive both IUI files and original files from the client device 106, In an alternate embodiment, the receipt and storage module 504 also stores an index that identifies which IUI file and original file are related to each other. The receipt and storage module 504 is responsive to the transmission module 506 and the creation module 510. The receipt and storage module 504 is also adapted for communication with the other modules 502-512 of the memory unit 404 to provide them access to the IUI file and the original file as described below. The operation of the receipt and storage module 504 is described below with reference to Figures 6-8.

The transmission module 506 is used to send the original file, or portions of the original file, or the IUI file to client devices 106, other servers or other printers120. In one embodiment, the transmission module 506 is software adapted for communication with client devices 106, other servers or other printers 120 to send the original file or the IUI file to them. The transmission module 506 uses standard protocols for communication with the client such as HTTP and JPIP. The transmission module 506 is capable of sending entire files, or even portions of files or commands. The transmission module 506 is also adapted for communication with the display interaction module 508 and the receipt and storage module 504. The operation of the transmission module 506 is described below with reference to Figures 6-8.

The display interaction module 508 is used to interact with the client device 106 for display modification operations like pan and zoom. The display interaction module 508 is responsive to requests or commands from the client devices 106 to provide more detailed information about an IUI file. The display interaction module 508 uses standard protocols for communication with the client such as HTTP and JPIP. In response to a command, the display interaction module 508 identifies the IUI file; identifies a corresponding original file and a corresponding location in the original file; retrieves an additional portion of the original file from the receipt and storage module 504; and sends the additional portion to the client using the transmission module 506. The display interaction module 508 is adapted for communication with client devices 106, the transmission module 506 and the receipt and storage module 504. The operation of the display interaction module 508 is described below with reference to Figures 6-8.

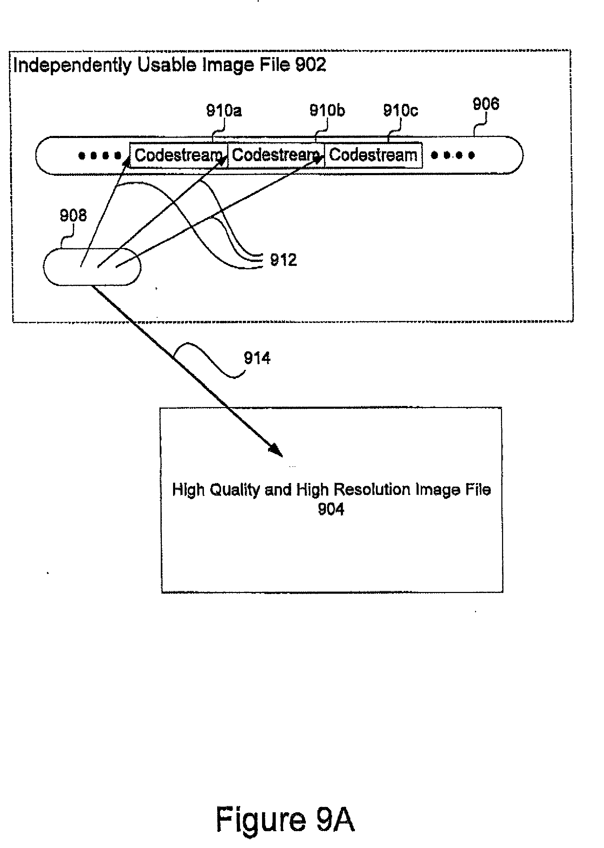

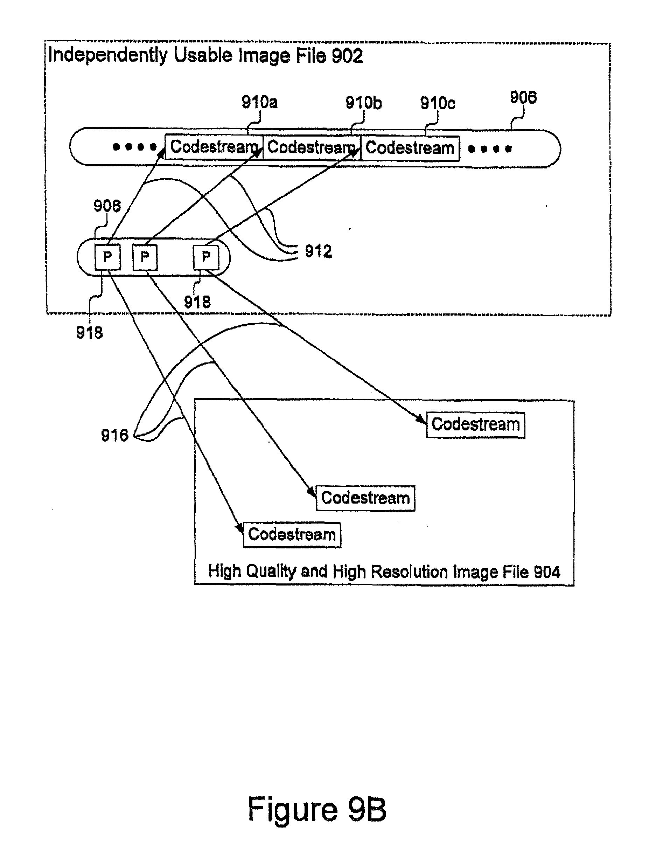

The creation module 510 is a module and routines for creating an IUI file. The IUI file includes low resolution data and references to the high resolution file (original file) as described herein with reference to Figures 9A and 9B. The creation module 510 creates the IUI file from the original file. The creation module 510 may use an original file from any source to create the IUI file. The original file (high resolution) can come from may different sources. In one embodiment, the creation module 510 uses an original file stored in the receipt and storage module 504. In a second embodiment, the creation module 510 uses an original file produced by a scanner of the SI-MFP 102. In a third embodiment, the creation module 510 uses an original file produced by RIP 126. In a fourth embodiment, the creation module 510 uses an original file from another location on the network such as the second SI-MFP 132 or the MFP 120. In yet another embodiment, the creation module 510 uses an original file transmitted directly to the SI-MFP 102 in one of several formats. The creation module 510 is adapted for communication with the receipt and storage module 504 to retrieve the original file, and store the IUI file. In an alternate embodiment, the creation module 510 is also adapted for communication with the transmission module 506 to receive an original file, pass it to the receipt and storage module 504 for storage, and also create the IUI file for storage in the receipt and storage module 504 and/or for transfer back to the client device 106. The operation of the creation module 510 is described below with reference to Figures 6-8. While the creation module 510 has been described above as operating at the SI-MFP 102, those skilled in the art will recognize that the IUI may be created by another creation module 510 on another SI-MFP 132, the client device 106 or any other device on the network 104.

The conversion module 518 is used to convert and the original file (high resolution) to a client selected format and resolution. The conversion module 518 is adapted for communication with the client device 106 to receive client selections as to image resolution and file format. The conversion module 518 is adapted for communication with transmission module 506 to send a converted filed to the requesting client, In one embodiment, the conversion module 518 stores a default format for the client device 106 and upon request for more detail beyond the IUI file, the conversion module 518 converts the file to the default format and resolution and then sends the file to the client. In another embodiment, the conversion module 518 converts only one or more portions of the original file (high resolution) on an as requested basis. It should be understood that the client selected format may be the maximum resolution the client can process or any other selected resolution. Moreover, the conversion module 518 may provide resolution conversion alone or format conversion alone or both.

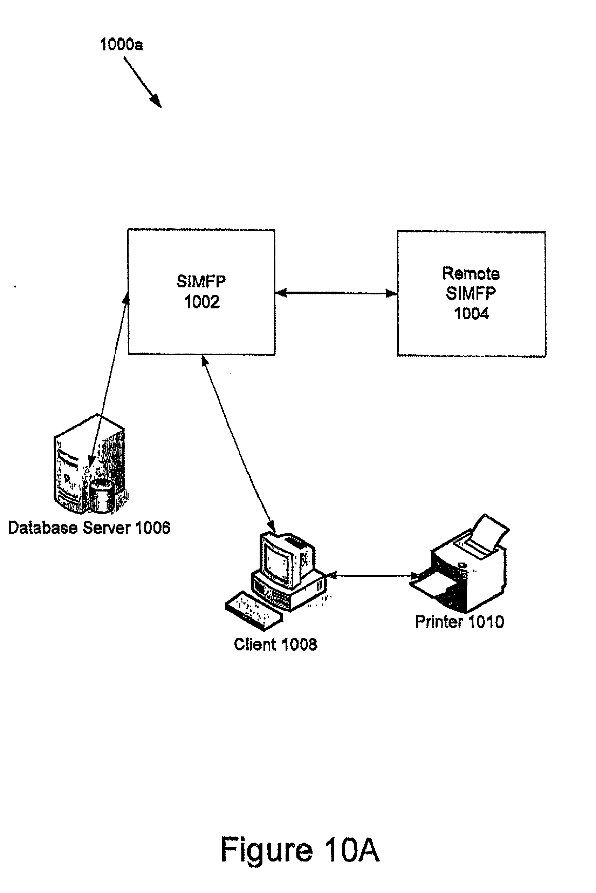

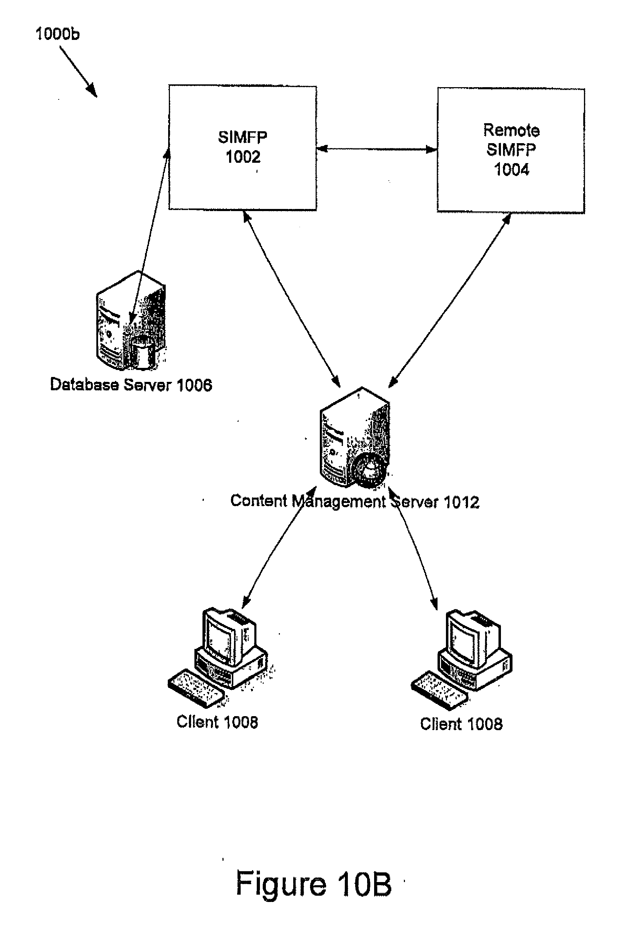

The print interaction module 512 is used for interaction with the client devices 106 to print at the SI-MFP 102, the remote MFP 120, the second SI-MPP or a printer 1010 attached to client device 1008 (See also Figure 10). In one embodiment, the print interaction module 512 is software adapted for communication with other printers 202, 120 and the client device 106. The print interaction module 512 is responsive to commands from the client device 106, and directly or indirectly adapts the file sent for printing according to the capabilities of the printer 202, 120, 1010 to which the file is being sent. The print interaction module 512 can effectuates four kinds of printing. First, print interaction module 512 can print on the SI-MFP 102 that is serving the document. In this case, the SI-MFP 102 uses the high resolution version, if appropriate, for printing. Second, the print interaction module 512 can print on another SI-MFP 132 or a printer device that includes a JPIP client. In this case, for example, the other SI-MFP 132 acts as a client (printing) and initiates a client JPIP session and the serving SI-MFP 102 initiates a server JPIP session. It is the client SI-MFP 132 that knows its own capabilities and requests the data from the server 102 according to its capabilities, then prints the file. Third, the print interaction module 512 can print on a non-SI-MFP target printing device that gets data directly (unmoderated) from the SI-MFP 102. In this case, the print interaction module 512 of the SI-MFP 102 discerns the target printer's capability, such as by retrieving printer drivers for the device, and makes and sends a file of the right format and resolution for the target printing device. Fourth, the print interaction module 512 communicates with a printer driver on the client 106 that intermediates the interaction between the SI-MFP 102 and the non-SI-MFP target printer. Thus, the print interaction module 512 automatically adapts the resolution of image sent to the resolution of the receiving device, thereby not wasting network bandwidth to transmit files that are not fully utilized by the target device. The print interaction module 512 is coupled to the transmission module 506 and the receipt and storage module 504; and the operation of the print interaction module 512 is further described below with reference to Figures 6-8.

The editing module 520 is used to edit the high resolution image file in response to client 106 instructions. The editing module 520 is adapted for communication with the client device 106 to receive client selections, and the web server software 516 in particular the JPIP capabilities. The editing module 520 is responsive to JPIP protocol, and provides for the creation of a new high resolution file by editing an existing high resolution file. For example, the high resolution file can be edited and printed back (editing during rendering) to create a new image object. Editing can be done by either replacing image objects during the JPIP session.

### Client Interaction Module

Referring now to Figure 3, a block diagram of a first embodiment of the client device 106 according to the present invention is shown. The first embodiment of the client device 106 includes a client interaction module 302, middleware 304 and applications 306. This first embodiment of the client device 106 provides base functionality that allows the client to interact with the SI-MFP 102.

The middleware 304 is of a conventional type and is any software operating between the operating system of the client device 106 and the applications 306. For example, the middleware 304 may be web servers, application servers, content management systems, and similar tools that support the application development and delivery process. The middleware 304 is coupled to the client interaction module 302 by signal line 308.

The applications 306 are of a conventional type and include any software that employs the capabilities of a computer directly to a task that the user wishes to perform. Typical examples of software applications are word processors, spreadsheets, electronic mail applications, financial applications, media players, and web browser applications. The applications 306 are coupled to the client interaction module 302 by signal line 310.

The client interaction module 302 provides the added capabilities of the present invention and allows the client device 106 to operate in a manner described below with reference to Figures 6-8. The client interaction module 302 further comprises a JPEG 2000 Interactive Protocol (JPIP) client 320, a client print control module 326.

The JPIP client 320 is conventional software to enable the client 106 to act as a JPIP client and communicate with a JPIP server. The JPIP client 320 allows the client 106 to interact with the SI-MFP 102 to consume the IUI file with standard or proprietary viewer, to zoom, pan, search, browse a document or collection of documents in IUI form; to store, retrieve, sort, email or enter an IUI file into a document management system and to print the IIJI file without the SI-MFP 102. The JPIP client 320 also provides enhanced interaction with SI-MFP including client/server communication as provided according JPIP standard. While the functionality described above has been provide in the context of JPIP, those skilled in the art will recognize that other communication protocols may provide similar functionality such as Adobe's portable document format.

The client print control module 326 is software for interacting with the print interaction module 512 of the SI-MFP 102. The client print control module 326 is used to send commands from the user to print a file at the SI-MFP 102, the SI-MFP 132, the remote server 120 or a local printer associated with another client device 106. In one embodiment, the client print control module 326 use and cooperates with the JPIP client 320 to perform the client operations that enable the four kinds of printing described above with reference to the print interaction module S12 of the SI-MFP 102. Specifically, the client print control module 326 initiates printing using a SI-MPP printer driver which determines a source of image (IUI file and/or SI-MFP served document) and causes printing on the serving SI-MFP 102. The client print control module 326 also initiates printing using a SI-MFP printer driver which determines a source of image (IUI file and/or SI-MFP served document) and causes printing on an SI-MFP (e.g., SI-MFP 132) other than the serving SI-MFP 132. The client print control module 326 also further initiates printing with a SI-MFP printer driver which determines a source of image (IUI file and/or SI-MFP served document), collects the high resolution image data at the client, and prints on a non SI-MFP printer. The client print control module 326 also controls any printing local to the client device 106. In this case, the client print control module 326 determines the capabilities of the local printer connected to the client device 106, retrieves either the IUI or the original, high resolution file, and sends it to the local printer connected to the client device 106 for rendering. The client print control module 326 is adapted for communication with the JPIP client 320, the client creation module 328, the middleware 304 and the applications 306.

The client creation module 328 is similar to the creation module 510 of the SI-MFP 102. The client creation module 328 is adapted to create an IUI file from an original, high resolution file. In most instances, the original, high resolution file is stored centrally at the SI-MFP 102 so that it and the IUI file are accessible to many users on the network 144. However, in certain instances it is advantageous to be able to create the IUI file at the client device 106, send the IUI file to the SI-MFP 102 for immediate use and then later send the original, high resolution file to the SI-MFP 102, if at all, when the network usage is low. The client creation module 328 can create an IUI file from an original, high resolution file and send the file to the JPIP client 320 for transmission to other devices, In yet another embodiment, the IUI files are provided with a unique identifier or file name so they are distinguishable over the network 106. In such a case, the client creation module 328 communicates with the creation module 510 of the SI-MFP to retrieve the unique identifier or file name. For example, it may be a hash of the file name and original, high resolution file for which an IUI file is being created. The client creation module 328 is adapted for communication with the JPIP client 320, the client creation module 328, the middleware 304 and the applications 306. Those skilled in the art will recognize that a module similar to client creation module 328 could be included as part of any computing device such as but not limited to conventional MFP, printer, fax machine, etc., so that it could interact as a client with the SI-MFP 102.

### Independently Usable Image (IUI) File Format

Referring now to Figures 9A-9D different embodiments of the IUI file 902 will be described. The IUI file 902 can take any number of different formats, and may use any number of different file protocols. Moreover, there may be many different IUI files 902 with different format for the same original high resolution document. In one embodiment, the IUI file 902 includes: a representation of an original document such as a code stream, a multimedia thumbnail, or the entire document at low resolution, and a reference to the original document such as a link to the SI-MFP location of the document or syntax that refers to SI-MFP served data. In a second embodiment, the IUI file 902 includes: 1) at least one code stream of image data; 2) at least one link to an object that includes or links to additional image information; the link can be to an object that includes a code stream of the entire original file or some portion of it with more information than 1), the link could also be to another IUI file, or other relevant objects that collective are more image information than 1); and 3) at least one format description for rending the image data. In a third and extended embodiment, the IUI file 902 includes the elements described above for the second embodiment plus a plurality of format descriptions for rending the image data. With these components in any of the above embodiments, the IUI file 902 can be converted to the user desired format at the server 102 or "just in time" as the client 106.

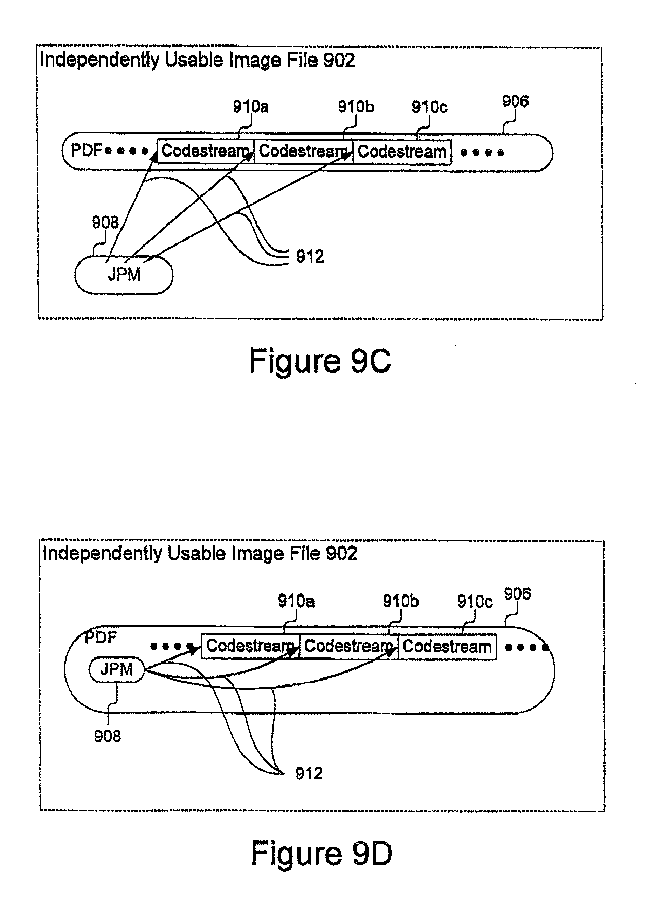

Referring now to Figure 9A, a block diagram of a first embodiment for an independently usable image file 902 according to the present invention is shown. Figure 9A diagrammatically shows the IUI file 902 and its relationship to the original high quality, high resolution image file 904. The IUI file 902 preferably includes a low resolution file 906 and a skeleton file 908 for metadata and other information. A "skeleton file" is a document file that has no code stream at all, just references to other files and code streams. In one embodiment, the low resolution file 906 comprises a plurality of code streams or elements 910a-910c that are a representation of the complete document to a preset level of granularity. The low resolution file 906 can be displayed or printed, and the information in the skeleton file 908 is ignored. The skeleton file 908 includes metadata, and a plurality of pointers 912 to the code streams 910a-910c in the low resolution file 906, and a pointer 914 to the original high quality, high resolution image file 904. For example, skeleton file 908 is usually very small, 3 kilobytes per page or less. Thus, if the original high quality, high resolution image file 904 is needed for display or printing at other devices, it can easily be identified and retrieved. In one embodiment, the IUI file 902 is a PDF file with a JPM file as the skeleton file placed inside the PDF file, in an appropriate metadata location. See Figure 9D. A PDF viewing tool, like Acrobat reader, will just ignore the data in the skeleton file 908. In an alternate embodiment, the IUI file 902 is a JPM file that includes a nested JPM file as the skeleton file 908.

Figure 9B is a block diagram of a second embodiment for an independently usable image file 902 according to the present invention. The second embodiment of the IUI file 902 has a similar structure to the first embodiment. For convenience and use of understanding, the same reference numerals have been used to represent like components having the same or similar functionality. The second embodiment of the IUI file 902 includes: a low resolution filed 906 having a plurality of code streams 910a-910c, and a skeleton file 908 having a plurality of pointers 918. The second embodiment for the IUI file 902 advantageously includes pointers 918 that point, both internally and externally. Each pointer 918 preferably has a reference 912 to code streams in the low resolution file 910a-910c. Each pointer 918 also includes a reference 916 to a corresponding code stream in the high quality and high resolution image file 904. The code streams in the high quality and high resolution image file 904 have significantly more information than their counterparts in the low-resolution image file 906. Thus, the skeleton file 908 of the second embodiment is particularly advantageous because it can be used to provide more information to the device 106 when the user is viewing the IUI file 902 and performs pan or zoom operations in which more information than is available in the low-resolution image file 906 is required to effectively display the image. Those skilled the art will recognize that PDF and JPM files have been used only by way of example, and that any number of other types of file formats may be used for the low-resolution file 906, the high-quality high-resolution image file 904, the skeleton file 908, and the IUI file 902.

Referring now to Figure 9C, another embodiment of the IUI file 902 is shown where the skeleton file refers to code streams that are contained within another file, even if that file is of a different format than the skeleton file. For example, this embodiment of the IUI file 902 is a PDF file containing several code streams of mask and image objects. Although not shown, it also contains all of the PDF syntax required to composite these images into a document image (or several pages of document images). The IUI file 902 also includes JPM skeleton file containing JPM syntax for compositing the same code stream objects into the same or similar document image (or pages). However, the JPM file contains no code streams, only references to the code streams in the PDF file. Additionally, this JPM skeleton file could be included in the PDF as metadata - See Figure 9D.

### Methods For Creating IUI Files

Referring now to Figure 6, a first embodiment of the method for serving images from a multifunction peripheral will be described. The process begins by capturing or receiving 602 image data. Next, the method determines 604 whether the data received is a rendered image. If not, the method continues in step 606 to rasterize the image, and then proceeds to step 608. If the image is already a rendered image, the method proceeds directly from step 604 to step 608. In step 608, the method converts and stores a primary high quality and high resolution image at the SI-MFP 102. Next the method creates 610 a secondary image from the primary image. As has been noted above, the secondary image preferably a lower resolution and lower quality image that is suited to the transmission characteristics of the network, the display characteristics of the client device 106, and/or the printer characteristics of a local printer associated with the client device 106. The process for generating the primary high quality and high resolution image file (Step 608) and creates 610 a secondary image (Step 610) are described in more detail below with reference to Figure 6B. The method then creates 612 a reference to the primary image. The reference may be a simple pointer or any similar type of mechanism to create a relationship between two files. Once the secondary image and the reference have been created, they are combined to create 614 an IUI file. Finally, the user may interact 616 with the IUI file, such as by displaying, printing, sending or any other manipulation of the file.

Referring now to Figure 6B, one embodiment of the process for creating the IUI file 902 and the high resolution file is described. The process begins in step 620 with the original image file being received or input, and a determination made as to whether it is a scanned document or a printed document. Creating an IUI file 902 from scanned documents is slightly different than from print rendered documents.

For scanned documents, the steps are as follows. In one embodiment the original high resolution scanned document image is analyzed for content (region segmentation, OCR, graphic, text, image, mask segmentation, etc.) in step 622. The document image may be divided in to regions to be handled as one or more separate document objects or the document may be divided into document objects to be divided into mask and image pairs. Mask objects tend to contain sharp binary imagery and are, therefore, usually compressed with a binary compressor such as JBIG2. The image objects, on the other hand, usually contain smooth continuous-tone imagery and are compressed with a continuous-tone compressor such as JPEG 2000.

The binary mask object data may or may not be sub-sampled before compression in step 626 by traditional means. If the high resolution sub-sampled mask is the right resolution for the IUI then it is copied. If not, the second sub-sampled mask appropriate for the IUI is created at the same time as the high resolution version.

Then the binary mask objects for the IUI and the high resolution version are compressed separately in step 630. If a quantizable binary compressor such as JBIG2 is used for the IUI mask object, then the remainder bits may or may not be quantized as appropriate. An alternative embodiment would use the sub-sampling capability of JBIG to perform the sub-sampling for the IUI, combining the step 626 and 630. This has the advantage that, in a later JPIP interaction, the IUI mask data can be supplemented with just the higher resolution parts of the JBIG image (not repeating the lower resolution bits) to create the higher resolution mask objects. In yet another embodiment using JBIG2 to combine steps 626 and 630, the codebook of a JBIG2 compressed mask object could be exchanged. The IUI document would have a codebook with low resolution symbols while the high resolution would have a codebook with high resolution symbols.

The image object data can also be sub-sampled separately for the IUI by traditional means in 628. Then the image objects can be compressed separately in 632. However, if JPEG 2000 is used, steps 628 and 632 can be combined. First, the entire image object is be compressed. Then a sub-sampled, quantized version of the image object is extracted for the IUI, using JPEG 2000 parsing technology,

The IUI and high resolution images are formatted separately in step 634 and 636, respectively. The formatting used is a function of the user's choice (for the IUI file) and the system designer's choice (for the high resolution). In one embodiment the IUI is a PDF document format and the high resolution is a JPM document format. In this case, a "skeleton" version (no data, just pointers to the data) of the JPM high resolution document file can be added to the IUI PDF document file as "metadata." This will enable all PDF readers to read the IUI file, while special readers or plug-in software can access the high resolution file.

In another embodiment, the IUI (of any format) contains a pointer to the high resolution JPM file. To access the high resolution file, a JPIP session is established and a JPM/JPIP viewer is used at the client 106.

For printed documents the following process is followed. If the source is a printed document the source is often a page description language such as Postscript or PDF or MS XPS. Or perhaps there is a proprietary set of graphic or rendering instructions. In any case, the document can be analyzed in step 624 while the instructions are processed. On embodiment for performing such analysis is disclosed in co-pending U.S. patent application serial no. 11/515,241 filed on August 31, 2006 entitled "Techniques for Image Segment Accumulation in Document Rendering." Once the mask and image objects are obtained they can be handled in the same way as the scanned case. In an alternative embodiment, the mask and image objects can be rendered twice, once for the IUI and once for the high resolution file. This combines step 624 with step 626 and/or 628.

Note that the parameters for creating the IUI (e.g. preferred resolution, compressed data size, compression type, file format, colors, etc.) are selected by the user and/or the client side document handling design or architecture. This needs to be set into the SI-MFP at installation, or preset by the user's system administrator, reset by the user for each instance. The parameters for the high resolution image are a function of the maximum capability of the S1-MFP 102 in question. However, these could also be user reset.

### Methods For Serving Documents

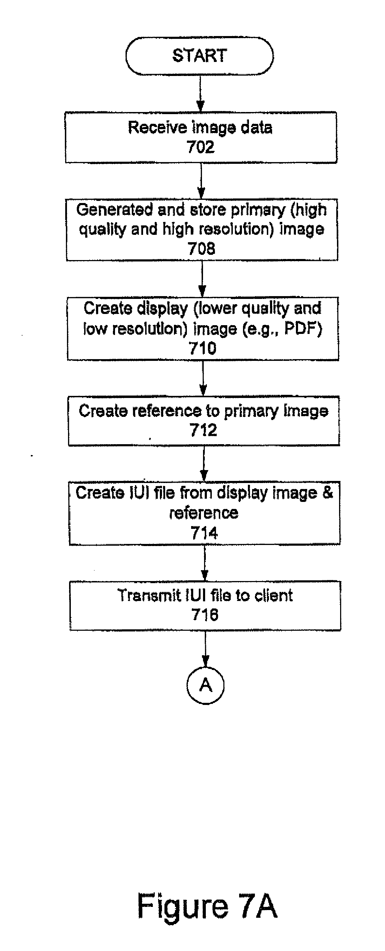

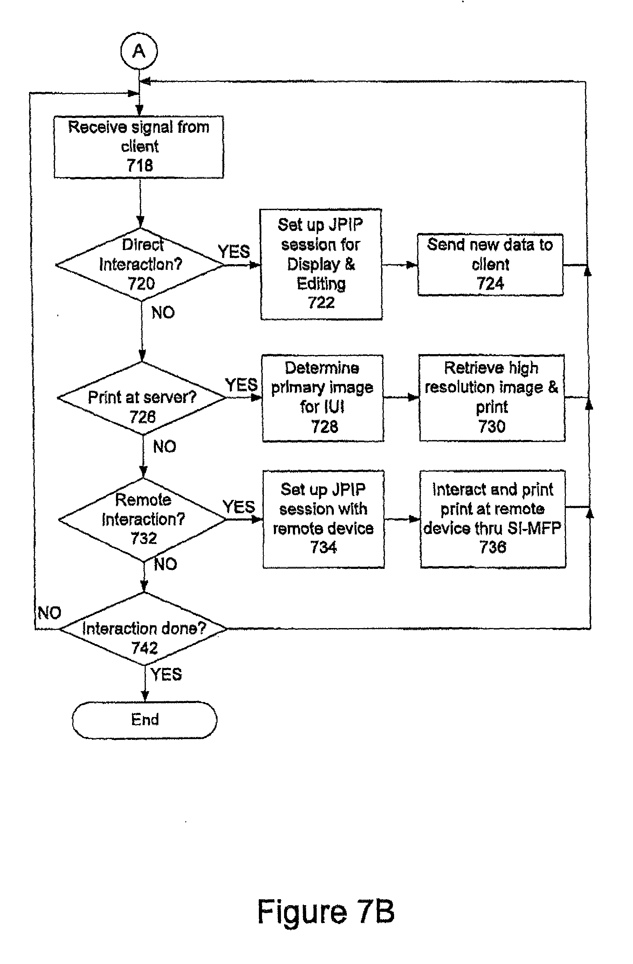

Referring now to Figures 7A and 7B, an exemplary embodiment of a method for serving documents from a SI-MFP 102 will be described. Figures 7A and 7B described the steps and processes undertaken by the SI-MFP 102 in serving documents. The process begins with the SI-MFP 102 receiving image data. Then in step 708, the document processor & server 204 generates and stores the primary image 708 as has been described above with reference to Figure 6. The primary image is a high-quality and high resolution image. Then the SI-MFP 102 creates 710 a secondary or display image. The secondary image is preferably a lower quality and lower resolution image as compared to the primary image. For example, the secondary image may be an image in a portable document format (PDF) such as that promulgated by Adobe Corp. of San Jose, California. The SI-MFP 102 then creates a reference to the primary image. Next, the SI-MFP 102 creates 714 an IUI file 902 is created from the display image and the reference. The SI-MFP 102, then transmits 716 the IUI file 902 to the client device 106.

Referring now to Figure 7B, the additional processing performed by the SI-MFP 102 will be described. In particular, it should be noted that once the IUI file 902 is transmitted by the SI-MFP 102 to the client device 106, the server 102 and client device 106 interact responsive to user input to provide all or selected portions of the primary image file. The processing performed by the SI-MFP 102 will now be described in detail. At some time after the SI-MFP 102 has sent the IUI file 902 to the client device 106, the SI-MFP 102 receives 718 a signal from the client device 106. The signal received by the SI-MFP 102 includes: 1) an indication of an action to be taken; and 2) a unique identifier associated with the IUI file 902, such that the associated primary image file can be identified and accessed.

The process undertaken by the SI-MFP 102 next determines 720 whether the signal received were to initiate a JPIP session for direct interaction on the client display. In one embodiment, the direct interaction includes the user panning on the image, zooming on the image, browsing or editing the IUI files. If the signal received in step 718 was an instruction to initiate a JPIP session for direct interaction on the client display, the method continues in step 722 to establish a JPIP client/session for display and editing of the IUI file 902. In accordance with the present invention, the user is provided with the display image file. However, if their particular aspects of the image being viewed that the user wants to magnify or focus upon, the present invention provides a facility to provide additional data, which resides in the primary image file, to the user. Once the new data has been retrieved, the new data is sent 724 to the client device 106. Once the data has been sent, the method returns to step 718 to determine whether any additional signals have been received from the client device 106.

On the other hand, if the instruction was not to initiate a JPIP session for direct interaction on the client display, the process transitions from step 720 to step 726 in which the SI-MFP 102 determines whether the signal received was to print the document at the SI-MFP 102. If so, the SI-MFP 102 determines 728 the primary image corresponding to the IUI file 902. The identified primary image file is then retrieved, and printed 730 by the SI-MFP 102. Since the SI-MFP 102 is able to use the primary image file, the resulting document printed by the SI-MFP 102 has a much higher quality and level of detail that would be provided merely by printing the display image file. Once the process in step 730 has been initiated, the method returns to step 718 to determine whether any additional signals have been received from the client device 106.

If the instruction was not to print at the ST-MFP 102, the method transitions from step 726 to step 732 where the SI-MFP 102 determines whether the instruction was to initiate a remote interaction with another device. For example, the client 106 may want the first SI-MFP 102 to establish a JPIP session with another device, the second SI-MFP 132 for display and printing, where the first SI-MFP 102 is the client and the second SI-MFP 132 is the server in the JPIP session.. If the instruction was to initiate a remote interaction with another device, the SI-MFP 102 sets up 734 a JPIP session with the remote device and requests a particular IUI file. Then the client 106 via the SI-MFP 102 interacts 736 with the remote server (the second SI-MFP 132). The interaction with the remote server can include panning on the image, zooming on the image, editing the high resolution file, and printing the high resolution file. After initiation of step 730, the process returns to step 718 to receive additional signals from the client device 106. If the instruction was not to print the document at a remote server, the method continues in step 742 to determine whether the display of the IUI file 902 is complete. If so the method is complete and ends. If not, the method continues and returns to step 718 to await additional signals from the client device 106. Those skilled in the art will recognize that the determining steps 720, 726, 732, and their associated processes may be performed in any order, and the order provided in figure 7B is merely by way of example.

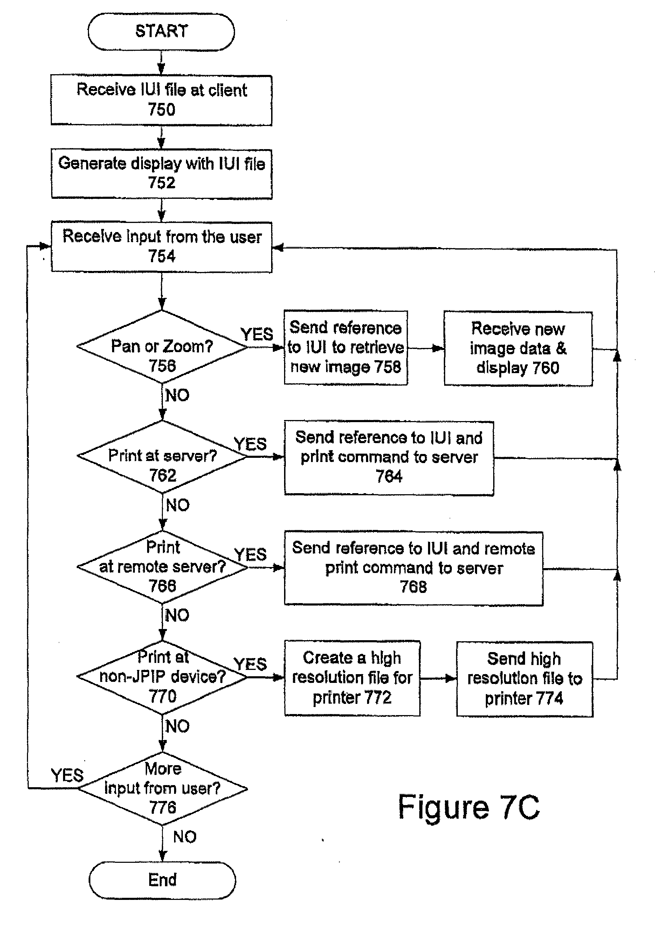

Referring now to Figure 7C, an exemplary process for interacting with an IUI file 902 will be discussed. Figure 7C describes the processes and steps performed by the client device 106 when interacting with the IUI file 902 and interrelate to the process described above with reference to Figures 7A and 7B for the SI-MFP 102. The process at the client device 106 begins with the receipt 750 of the IUI file 902. The user can manipulate this file, and the client device 106 generates 752 a display with the IUI file 902. The client device 106 then receives 754 input from the user. The method continues in step 756 to determine whether the user as input a command to pan or zoom display of the image and thus establish a JPIP session with the SI-MFP 102 for interacting with high resolution file. If the user has input a command to pan or zoom display of the image, the method continues in step 758 by sending a reference to the independently usable image file and an instruction to retrieve a new image to the SI-MFP 102. The SI-MFP 102 responds, and the client device 106 receives 760 new image data, and updates the display of the image using the new data, Next, the method continues to step 754 to receive or wait for additional input from the user. If the input command is not a pan or zoom command, the method transitions from step 756 to step 762. In step 762, the client device 106 determines whether the input received from the user was a command to print the document at the SI-MFP 102. If the input received from the user was a command to print the document at the SI-MFP 102, the client device 106 sends 764 a reference to the IUI file 902 along with the print command to the SI-MFP 102. Once the instruction has been sent, the method continues to step 754 to receive or wait for additional input from the user. If in step 762 the input from the user is not an instruction to print at the server 102, the method continues to step 766. There the method determines 766 whether the input from the user was a command to print the document at a remote server 120. If so, the method proceeds to step 768 where the client device 106 sends to the SI-MFP 102 a reference to the IUI file 902, a command to print the file at a remote server, and an identification of a remote server. After step 768 has been completed, the method returns to step 754 to receive additional input from the user. If in step 766, the method determined that the input from the user was not a command to print the document at a remote server, the method transitions to step 770. In step 770, the method determines whether the input by the user was to print the document at a non-JPIP capable device such as a local printer 1010. If so, the client device 106 instructs the SI-MFP 102 to create an appropriate high resolution version of the image, format it for the device. The formatted appropriate high resolution image is then sent 774 to local printer for printing (or back to the client 106), and the method returns to step 754 to receive additional input from the user. If the input from the user was not a command to print at a local printer, the method proceeds from step 770 to step 776. In step 776, the client determines 776 whether there is more input from the user. If so, the method returns to step 754 to receive input from the user. If not, the method is complete and the method ends.

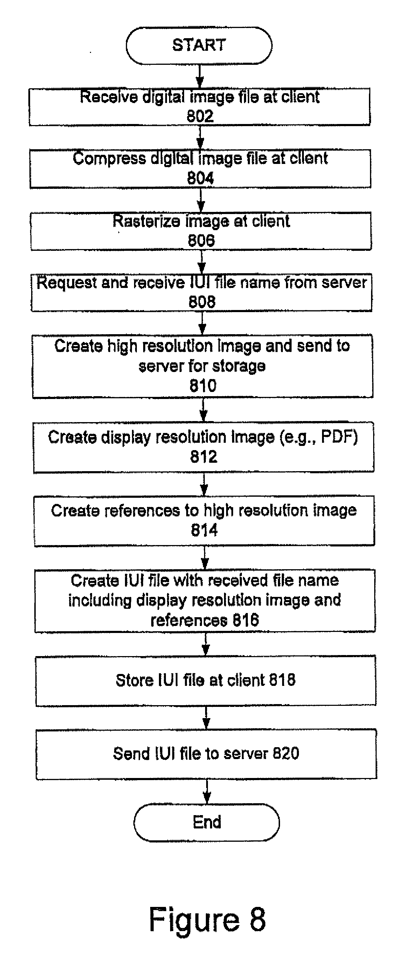

Referring now to Figure 8, a second embodiment of a method for serving documents from an SI-MFP 102 is described. The method of Figure 8 illustrates how the present invention may operate at the client device 106 in contrast to the first embodiment in which the serving of documents primarily takes place at the SI-MFP 102. The method begins by receiving 802 a digital image file at the client device 106. For example, the digital image may be generated by a local scanner coupled to the client device 106. Alternatively, the digital image may be generated by applications running on the same computing device as the client device 106. Next, the digital image file is compressed 804 at the client device 106, Optionally, the image may also be rasterized 806 at the client device 106. Then, the client device 106 requests 808 and receives an independently usable image filename from the SI-MFP 102. To enable the transfer and use of independently usable image files between this client device 106 and other client devices 106, other servers 120 or any other device, the SI-MFP 102 maintains a unique namespace such that any independently usable image file and its corresponding high resolution, high quality primary file can be identified with the independently usable image filename. Thus, whether the primary file and the IUI file 902 are stored at the SI-MFP 102, another server 120, or any client device 106, they may be accessed and interacted with. Once a filename for the IUI file 902 has been obtained from the SI-MFP 102, the client device 106 creates 810 a high-resolution image and sends the high-resolution image to the SI-MFP 102 for storage. Those skilled in the art will recognize that the high-resolution image is temporarily stored at the client device 106. The high-resolution image can either be immediately sent to the server 102, sent to the server 102 at times when the communication channel between the client device 106 and SI-MFP 102 have minimal traffic, or can even be divided into portions and transmitted to the SI-MFP 102 in parts. The client device 106 also creates a display resolution image. For example, this display resolution image may be in a portable document format such as that made available by Adobe Corporation of San Jose, California. The client device 106 also creates 814 references between portions of the high resolution image and portions of the display resolution image. Those skilled in the art will recognize that steps 810, 812 and 814 that have just been described above may be performed in any order, and the description above is only by way of example. The client device 106 next creates 816 an IUI file 902 with the received filename name and includes the display resolution image and the references to the high-resolution image. The IUI file 902 can then be used 818 at the client device 106 such as storing the IUI file 902 at the client device 106, displaying the IUI file 902 at the client device 106 or printing the IUI file 902 at the client device 106. Finally, the IUI file 902 is sent 820 to the SI-MFP 102, and the method is complete and ends.

### Alternate System Architectures

Figure 10A is a block diagram of a second embodiment of the system 1000a of the present invention for serving documents from a multifunction peripheral 1002. The system 1000a comprises a ST-MFP 1002, a remote SI-MFP 1004, a database server 1006, a client device 1008 and a locally connected printer 1010, The connections between the devices is a conventional network connection such as a LAN or WAN. The system 1000a of Figure 10A illustrates an architecture in which the original, high resolution, high-quality image file 904 could reside and/or be generated at the SI-MFP 1002, the remote SI-MFP 1004, the database server 1006, and the client device 1008. Moreover, the modules described above with reference to Figure 5 could also be distributed in the different components of the system 1000a. For example, the receipt and storage module 504 may be part of the database server 1006. Once the independently usable image file 902 is created, it can be send to any of the devices for printing or display. Moreover, the independently usable image 902 can be used to print the corresponding file on the SI-MFP 1002, the remote SI-MFP 1004, or the printer 1010 responsive to the request of the user. Further, the IUI file 902 may be stored on any of the devices of the system 1000a. A particular advantage of the present invention is that the file sent to the printing device will match the printing capabilities of that device. Thus, since the SI-MFP 1002 and the remote SI-MFP 1004 are likely to have high-resolution printing capability, the original, high resolution, high-quality image file 904 is sent to them if they are the selected printing device, while the low-resolution image file 906 can be used by the local printer 1010 that may have a lower resolution printing capability. Yet another advantage of this architecture is that the database server 1006 need only store the IUI file 902 instead of the much larger original file yielding a significant storage space savings. Nonetheless, the IUI file stored on the database server 1006 can still be used for searching, browsing and viewing, even without a connect to the SI-MFP 1002.

Figure 10B is a block diagram of a third embodiment of the system 1000b of the present invention for serving documents from a multifunction peripheral 1002. The system 1000b of Figure 10B is similar to that of Figure 10A, but also includes a content management server 1012 and a plurality of client devices 1008. This embodiment illustrates a mechanism for storing all the original, high resolution, high-quality image files at a widely accessible location, such as the content management server 1012. This is advantageous because it allows multiple SI-MFP with access to print or display the file. Those skilled in the art will recognize that there could be a plurality of content management servers 1012 and that image files could be distributed over them, and cached or replicated over them. To those skilled in the arts will also recognize that conventional security mechanisms may be provided to limit access to the independently usable image file 902 as well as the original, high resolution, high-quality image file 904 according to access controls set by the user. It should be noted that in cases where a distributed set of content management servers are used, that load and bandwidth balancing systems such as BitTorrent or similar peer-to-peer content replication systems might be employed within the scope of this invention. Such a system would greatly decrease bandwidth cost associated with repeated printings of high resolution data within a single organization.

The foregoing description of the embodiments of the present invention has been presented for the purposes of illustration and description. It is not intended to be exhaustive or to limit the present invention to the precise form disclosed. Many modifications and variations are possible in light of the above teaching. It is intended that the scope of the present invention be limited not by this detailed description, but rather by the claims of this application. As will be understood by those familiar with the art, the present invention may be embodied in other specific forms without departing from the spirit or essential characteristics thereof. Likewise, the particular naming and division of the modules, routines, features, attributes, methodologies and other aspects are not mandatory or significant, and the mechanisms that implement the present invention or its features may have different names, divisions and/or formats. Furthermore, as will be apparent to one of ordinary skill in the relevant art, the modules, routines, features, attributes, methodologies and other aspects of the present invention can be implemented as software, hardware, firmware or any combination of the three. Of course, wherever a component, an example of which is a module, of the present invention is implemented as software, the component can be implemented as a standalone program, as part of a larger program, as a plurality of separate programs, as a statically or dynamically linked library, as a kernel loadable module, as a device driver, and/or in every and any other way known now or in the future to those of ordinary skill in the art of computer programming. Additionally, the present invention is in no way limited to implementation in any specific programming language, or for any specific operating system or environment. Accordingly, the disclosure of the present invention is intended to be illustrative, but not limiting, of the scope of the present invention, which is set forth in the following claims.

## Claims

1. An apparatus for serving documents, the apparatus comprising:
a document processor adapted to generate an independently usable file from a primary file, the document processor coupled to receive the primary file and to output the independently usable file, the document processor coupled to communicate the independently usable file; and
a data storage coupled to the document processor and adapted to store the primary file and the independently usable file.

2. The apparatus of claim 1, further comprising a multifunction peripheral adapted for printing the document and capturing an image to produce the primary file.

3. The apparatus of claim 1, wherein the document processor further comprises a receipt and storage module for cooperating with the data storage to store and retrieve the primary file and the independently usable file.

4. The apparatus of claim 1, wherein the document processor further comprises a transmission module for sending and receiving the primary file and the independently usable file to and from an other device, the transmission module coupled for communication with the other device.

5. The apparatus of claim 1, wherein the document processor further comprises a display interaction module for interacting with a client device to provide additional information about the independently usable file, the display interaction module coupled for communication with the client device.

6. The apparatus of claim 5, wherein the display interaction module is capable of receiving an independently usable file name and identifying portion of a primary file and sending the identified portions of the primary file.

7. The apparatus of claim 1, wherein the document processor further comprises a creation module for receiving a primary file and generating the independently usable file, the creation module coupled to receive the primary file and coupled to provide the independently usable file.

8. The apparatus of claim 7, wherein the independently usable file comprises a low resolution file having a plurality of code streams that are a representation of the primary file to a preset level of granularity, and skeleton file including metadata and other information.

9. The apparatus of claim 1, wherein the document processor further comprises a print interaction module for automatically adapting the resolution of file sent to the resolution of a receiving device and sending the independently usable file or the primary file to the receiving device responsive to a request from a user.

10. The apparatus of claim 9, wherein the print interaction module for determines the file to send to the receiving device based on the print capabilities of the other device.

11. The apparatus of claim 1, further comprising a client interaction module for interacting with the document processor to enable printing of the primary file or display of the independently usable file, the client interaction module coupled to the document processor.

12. The apparatus of claim 11, the client interaction module further comprises a client communication module for sending and receiving commands, the IUI file, the primary file or portions thereof to and from the document processor, the client interaction module coupled to the document processor.

13. The apparatus of claim 11. the client interaction module further comprises a client storage module for storing the IUI file, the primary file or portions thereof, the client storage module coupled to the document processor.

14. The apparatus of claim 11, the client interaction module further comprises a client display control module adapted to receive user input information regarding presentation of the IUI file, to determine whether additional information is needed beyond data provided by in the IUI file and to communicates with the document processor.

15. The apparatus of claim 11, the client interaction module further comprises a client print control module for interacting with the document processor to send commands from a user to print the primary file.

16. The apparatus of claim 11, the client interaction module further comprises a client creation module adapted to create an independently usable file from a primary file, the client creation module coupled to receive the primary file and the coupled to output the independently usable file to the document processor.

17. The apparatus of claim 1, further comprises a client device adapted for communication with the document processor, the client capable of manipulating the independently usable file.

18. A method for generating an independently usable file, the method comprising:
receiving data;
storing the received data as a primary file;
creating a secondary file from the primary file, the secondary image having a plurality of code streams that are a representation of the primary file to a preset level of granularity;
creating a reference to the primary file; and
combining the reference and the secondary file as the independently usable file.

19. The method of claim 18, further comprising:
determining whether the data received is a rendered image; and
if the data received is not a rendered image, rasterizing the data.

20. The method of claim 18, further comprising compressing the received data.

21. The method of claim 18, further comprising:
sending the independently usable file to a client device; and
receiving a signal from the client.

22. The method of claim 21, further comprising:
determining whether the signal was to modify the display of the independently usable file;
determine and retrieve new data from primary file; and
send new data to the client device.

23. The method of claim 21, further comprising:
determining whether the signal was to print the independently usable file; and
determine primary file corresponding to the independently usable file; and
send determined primary file to a printer for printing,

24. The method of claim 18, wherein the independently usable file comprises a plurality of format descriptions for rending the image data.

25. The method of claim 18, wherein the independently usable file is in a portable document format and the independently usable file includes a skeleton file in a JPM format that includes the reference.
